# EUROPÄISCHE PATENTSCHRIFT

(11) **EP 2 647 965 B1**
(45) Veröffentlichungstag und Bekanntmachung des Hinweises auf die Patenterteilung: **04.06.2014**
(21) Anmeldenummer: 12163138.6
(22) Anmeldetag: 04.04.2012
(51) Int. Cl.: G01D 5/347

(54) **Messwertgeber zum Erhalt einer Positionsinformation und Verfahren zu dessen Betrieb**
Position encoder and method for operating same
Codeur de position et son procédé de fonctionnement

(43) Veröffentlichungstag der Anmeldung: 09.10.2013
(73) Patentinhaber: Siemens Aktiengesellschaft, 80333 München (DE)
(72) Erfinder: Zettner, Jürgen, 90587 Veitsbronn (DE); Schimmer, Jürgen, 90473 Nürnberg (DE); Wetzel, Ulrich, 91325 Adelsdorf (DE)

(56) Entgegenhaltungen:
- JP-A- 2009 281 913
- US-A- 4 932 131
- US-B1- 7 432 496

## Beschreibung

Die Erfindung betrifft einen ansonsten mitunter auch nur kurz als Geber bezeichneten Messwertgeber zum Erhalt einer Positionsinformation sowie ein Verfahren zum Betrieb eines Messwertgebers. Solche Messwertgeber sind an sich bekannt. Exemplarisch kann auf sogenannte Absolut- oder Inkrementalgeber verwiesen werden.

Die Erfindung betrifft im Weiteren auch ein Aggregat mit einem solchen Messwertgeber, also zum Beispiel einen Antrieb oder einen Elektromotor, um dort als Positionsinformation eine Information in Bezug auf eine Geschwindigkeit oder Lage des Motors/Antriebs oder allgemein des jeweiligen Aggregats zu erhalten.

Der hier zu beschreibende Messwertgeber basiert auf einer optischen Abtastung einer Maßverkörperung. Dies ist zum Beispiel bei Absolut- oder Inkrementalgebern ebenfalls bekannt und exemplarisch kann auch die EP 512 864 A verwiesen werden.

Die EP 1 677 081 B1 schlägt für eine optische Abtastung die Verwendung einer diffraktiv wirkenden Maßverkörperung für einen Messwertgeber zum Erhalt einer Positionsinformation vor.

Messwertgeber, speziell Messwertgeber für die Antriebstechnik, unterliegen besonders hohen Anforderungen an eine jeweilige Fertigungstoleranz, sowie jeweilige Lagetoleranzen im Betrieb. Diffraktiv optische Messwertgeber auf Basis von computergenerierten Hologrammen, wie zum Beispiel in der oben genannten EP 1 677 081 B1 beschrieben, versprechen verbesserte Toleranzen, da die verwendeten Hologramme gegen Verschiebung invariant sind und zum Beispiel eine Absolutlage binär codiert wird.

Messwertgeber, die auf einer solchen mikrostrukturell codierten Maßverkörperung basieren, sind demgemäß prinzipbedingt tolerant gegenüber einer eventuellen Verschiebung des bei einer Abtastung der Maßverkörperung zur Beleuchtung der beugenden Encoderstruktur innerhalb eines Hologramms verwendeten Laserspots.
Jedoch fallen auch hier speziell Verkippungen eines jeweiligen Trägers der Maßverkörperung zu einer Achse des Gebers, speziell eines vom Geber umfassten Detektors, also ein Taumeln während der Bewegung der Maßverkörperung oder insgesamt eine Fehlstellung, sowie auch eine eventuelle Exzentrizität einer Rotationsachse des jeweiligen Aggregats, also zum Beispiel eines Antriebs, zum Spurkreis der von der Maßverkörperung umfassten Codierstrukturen ins Gewicht. Die gilt in besonderer Weise für von der Maßverkörperung eventuell umfasste, nach herkömmlicher Technik und unter Benutzung speziell geformter Blenden ausgeführter Inkrementalspuren.

Alle im Stand der Technik bekannten Messwertgeber unterliegen damit weiterhin Fertigungstoleranzen, die durch aufwändige Justage in der Inbetriebnahmephase einen zum Teil nicht unerheblichen Anteil der Kosten eines Gebers verursachen.

Damit ist die Eignung solcher Messwertgeber für den industriellen Einsatz, speziell wenn es darum geht, besondere Anforderungen an die Genauigkeit und Verlässlichkeit der im Betrieb gelieferten Positionsinformationen zu erfüllen, noch nicht optimal.

Diese Problematik ist auch in der US 7,432,496 und der US 4,932,131 beschrieben. In der US 4,932,131 wird mit einem zur Abtastung einer magnetischen Spurverkörperung vorgesehenen Schreib-/Lesekopf in die Spurverkörperung eine Positionsinformation eingebracht, die auf einer interferometrisch ermittelten Position des Schreib-/Lesekopfes basiert. In der US 7,432,496 werden mit dem dortigen Schreib-/Lesekopf parallel zu einer vorgegebenen Maßverkörperung Korrekturinformationen geschrieben, die zur Kalibrierung der Auswertung der Maßverkörperung Verwendung finden sollen.

Eine Aufgabe der Erfindung besteht darin, einen Messwertgeber und ein Verfahren zu dessen Inbetriebnahme als Teilaspekt von dessen Herstellung und dessen erstmaligem Betrieb im Rahmen der Herstellung anzugeben, das die oben genannten Nachteile vermeidet oder zumindest reduziert.

Diese Aufgabe wird erfindungsgemäß mit einem Messwertgeber zum Erhalt einer Positionsinformation, tatsächlich bereits mit einer Sende- / Empfangseinheit eines solchen Messwertgebers, mit den Merkmalen des Anspruchs 1 gelöst. Dazu ist bei einem Messwertgeber zum Erhalt einer Positionsinformation, wobei der Messwertgeber eine Sende- / Empfangseinheit zur Abtastung einer Maßverkörperung umfasst, insbesondere vorgesehen, dass der Messwertgeber selbst Mittel zum Einbringen von Codierinformationen in die Maßverkörperung umfasst.

Die oben genannte Aufgabe wird ebenfalls mit einem Verfahren zum Betrieb eines solchen Messwertgebers mit den Merkmalen des ersten unabhängigen Verfahrensanspruchs gelöst. Dazu ist bei einem Verfahren zum Betrieb eines Messwertgebers insbesondere vorgesehen, dass dieser nach einer Montage in einem nachfolgenden Inbetriebnahmeschritt mit dem oder den von dem Messwertgeber umfassten Mittel bzw. Mitteln zum Einbringen von Codierinformationen in die Maßverkörperung selbst die Codierinformationen in die Maßverkörperung einbringt.

Der Vorteil der Erfindung besteht darin, dass das Einbringen, insbesondere das Schreiben, der jeweiligen Codierinformationen, insbesondere Codierinformationsspuren, - und damit die Erstellung der Maßverkörperung - nach einer Montage des Messwertgebers geeignet ist, die oben beschriebenen Ungenauigkeiten zu vermeiden. Ein solches nachträgliches Einbringen der Codierinformationen führt dazu, dass eine Position und Ausrichtung der Codierinformation immer exakt zum Messwertgeber passt. Indem der Messwertgeber das oder die Mittel zum Einbringen von Codierinformationen in die Maßverkörperung selbst umfasst, kann das Einbringen der Codierinformation nach einer Montage des Messwertgebers ohne zusätzliche Hilfsmittel erfolgen. Das Einbringen der Codierinformation erfolgt in einem sich an die Montage anschließenden Inbetriebnahmeschritt. Dieser Inbetriebnahmeschritt stellt bereits einen ersten Betrieb und das Verfahren zum Einbringen der Codierinformationen während des Inbetriebnahmeschritts damit ein Verfahren zum Betrieb des Messwertgebers dar. Danach ist der Messwert geber ohne weitere Notwendigkeit einer Justierung oder dergleichen betriebsbereit.

Vorteilhafte Ausgestaltungen der Erfindung sind Gegenstand der abhängigen Ansprüche. Dabei verwendete Rückbeziehungen weisen auf die weitere Ausbildung des Gegenstandes des Hauptanspruches durch die Merkmale des jeweiligen abhängigen Anspruches hin. Sie sind nicht als ein Verzicht auf die Erzielung eines selbständigen, gegenständlichen Schutzes für die Merkmalskombinationen der rückbezogenen abhängigen Ansprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Messwertgebers ist vorgesehen, dass die Sende- / Empfangseinheit als Mittel zum Einbringen von Codierinformationen in die Maßverkörperung fungiert. Eine solche Sende- / Empfangseinheit umfasst zumindest eine Lichtquelle, zum Beispiel eine Laserdiode. Wenn die beim Messwertgeber ohnehin vorhandene Sende- / Empfangseinheit als Mittel zum Einbringen von Codierinformationen in die Maßverkörperung fungiert, werden keine zusätzlichen Bauteile, etwa eine von der Sende- / Empfangseinheit unabhängige Laserdiode oder dergleichen benötigt. Des Weiteren wird durch das Einbringen, insbesondere Schreiben, der relevanten Codierinformationen / Codierinformationsspuren durch den Laser oder den Strahlengang wie er sich in der Auslesephase , also im späteren im Betriebszustand ergibt, eine zur Sende- / Empfangseinheit optimal ausgerichtete Codierstruktur erzielt.

Bei einem korrespondierenden Verfahren ist vorgesehen, dass nach einer Montage des Messwertgebers dieser in einem nachfolgenden Inbetriebnahmeschritt mit der von dem Messwertgeber umfassten und als Mittel zum Einbringen von Codierinformationen in die Maßverkörperung fungierenden Sende- / Empfangseinheit selbst die Codierinformationen in die Maßverkörperung einbringt.

Bei einer weiteren Ausführungsform des Messwertgebers ist vorgesehen, dass die Sende- / Empfangseinheit eine in zumindest zwei unterschiedlichen Leistungsstufen betreibbare Lichtquelle umfasst, und dass die Lichtquelle beim Einbringen von Codierinformationen in die Maßverkörperung mit einer höheren Leistung als beim Abtasten der Maßverkörperung betreibbar ist. Dabei kommt in Betracht, dass die Lichtquelle zumindest eine erste und zweite Laserdiode umfasst und dass die erste Laserdiode mit einer hohen Leistung betreibbar ist oder betrieben wird und dass die zweite Laserdiode mit einer im Vergleich dazu geringeren Leistung betreibbar ist oder betrieben wird. Zum Betrieb der Sende- / Empfangseinheit in einer von zumindest zwei unterschiedlichen Leistungsstufen reicht es demnach aus, wenn von deren Lichtquelle die betreffende Laserdiode(n) aktivierbar ist oder aktiviert wird.

Bei einer nochmals weiteren Ausführungsform ist vorgesehen, dass die Sende- / Empfangseinheit als in zumindest zwei unterschiedlichen Leistungsstufen betreibbare Lichtquelle eine Lichtquelle mit zumindest einer ersten und einer zweiten Laserdiode umfasst. Bei einem Betrieb der Lichtquelle mit hoher Leistung sind zumindest die erste und die zweite Laserdiode aktivierbar oder werden zumindest die erste und die zweite Laserdiode aktiviert. Mehr als zwei Laserdioden oder dergleichen sind ebenfalls denkbar, wobei mit der Anzahl der jeweils aktivierten Laserdioden die zu deren Betrieb zugeführte und die abgegebene, resultierende Leistung zum Einbringen der Codierinformation steigt.

Ein Betrieb der Lichtquelle mit hoher Leistung wird im Weiteren auch kurz als Schreibbetrieb oder als Schreibphase bezeichnet, den im Schreibbetrieb werden die Codierinformationen in die Maßverkörperung eingebracht. Im Gegensatz dazu werden das Abtasten der Maßverkörperung und das damit bewirkte Auslesen der Codierinformationen als Lesebetrieb oder Lesephase bezeichnet. In einer solchen Lesephase soll die Codierinformation normalerweise nicht verändert werden. Deshalb wird die Lichtquelle mit verminderter Leistung betrieben. Ein Betrieb mit verminderter Leistung bedeutet bei einer Lichtquelle mit zum Beispiel genau zwei Laserdioden, dass nur die erste oder nur die zweite Laserdiode aktiviert wird. Bei einer Lichtquelle mit mehr als zwei Laserdioden oder dergleichen sind in der Lesephase zumindest weniger Laserdioden aktiv oder aktivierbar als in der Schreibphase. Eine Lichtquelle mit mehr als zwei Laserdioden ist auch vorteilhaft, um die Ausfallsicherheit eines Messwertgebers mit einer solchen Lichtquelle zu erhöhen. Ein gleichzeitiger Betrieb mehrerer Laserdioden ist nur während der Inbetriebnahmephase erforderlich. Danach sind die von der Lichtquelle umfassten Laserdioden für einen Lesebetrieb alternativ verwendbar. Wenn also im Betrieb eine Laserdiode ausfallen sollte, kann auf eine andere Laserdiode der selben Lichtquelle umgeschaltet werden. Für den Lesebetrieb sind bei einer Lichtquelle mit mehreren Laserdioden die einzelnen Laserdioden also redundant verwendbar.

Bei einem Verfahren zum Betrieb eines Messwertgebers mit einer Sende- / Empfangseinheit, die eine in zumindest zwei unterschiedlichen Leistungsstufen betreibbare Lichtquelle umfasst, ist vorgesehen, dass die Lichtquelle beim Einbringen von Codierinformationen in die Maßverkörperung mit einer höheren Leistung als beim Abtasten (Auslesen) der Maßverkörperung betrieben wird. Die zumindest zwei unterschiedlichen Leistungsstufen ermöglichen unterschiedliche Betriebsarten des Messwertgebers. Eine erste Betriebsart, in der die Lichtquelle, also zum Beispiel eine Laserdiode oder eine Mehrzahl von Laserdioden, mit einer höheren Leistung betrieben werden, ermöglicht das Einbringen der Codierinformationen. In zumindest einer weiteren Betriebsart wird die Lichtquelle mit einer im Vergleich zur ersten Betriebsart geringeren Leistung betrieben. In dieser Betriebsart ist die Abtastung der Maßverkörperung und ein Auslesen der davon umfassten Codierinformationen möglich, ohne dass die Maßverkörperung / Codierinformation verändert wird.

Erfindungsgemäß ist vorgesehen, dass die Sende- / Empfangseinheit eine in zumindest zwei unterschiedlichen Wellenlängenbereichen betreibbare Lichtquelle umfasst, und dass die Lichtquelle beim Einbringen von Codierinformationen in die Maßverkörperung in einem anderen Wellenlängenbereich als beim Abtasten der Maßverkörperung betreibbar ist. Dies ist von Vorteil, wenn die Codierinformationen in Materialien einzubringen sind, die sensitiv für eine von der Lichtquelle, also zum Beispiel zumindest eine Laserdiode, abgestrahlte jeweilige Wellenlänge oder einen jeweiligen Wellenlängenbereich sind, nämlich zum Beispiel Dichromatgelatine. Bei einer Fortführung dieser Ausführungsform ist vorgesehen, dass die Sende- / Empfangseinheit als in zumindest zwei unterschiedlichen Wellenlängenbereichen betreibbare Lichtquelle eine Lichtquelle mit zumindest einer ersten und einer zweiten Laserdiode umfasst und dass bei einem Betrieb der Lichtquelle in einem ersten Wellenlängenbereich eine für diesen Wellenlängenbereich vorgesehene Laserdiode und bei einem Betrieb der Lichtquelle in einem zweiten Wellenlängenbereich eine für diesen Wellenlängenbereich vorgesehene Laserdiode aktivierbar ist. Die Lichtquelle umfasst also zumindest zwei Laserdioden, und jede der zumindest zwei Laserdioden ist für einen unterschiedlichen Wellenlängenbereich vorgesehen. Bei einem Verfahren zum Betrieb eines solchen Messwertgebers wird zum Einbringen der Codierinformationen die Lichtquelle in einem ersten Wellenlängenbereich betrieben oder die oder jede für den jeweiligen Wellenlängenbereich vorgesehene Laserdiode aktiviert. Beim späteren Abtasten der so erzeugten Maßverkörperung wird die Lichtquelle in dem mindesten einen anderen Wellenlängenbereich (zweiter Wellenlängenbereich) betrieben oder die oder jede für den mindesten einen anderen, zweiten Wellenlängenbereich vorgesehene Laserdiode aktiviert.

Die für das Einbringen der Codierinformationen in die jeweilige Maßverkörperung besonders relevanten Codierspuren sind speziell eine sogenannte Absolutspur, und/oder die sogenannten elliptischen Spuren, und/oder die sogenannten inkrementellen Spuren. Der Vorteil der Erfindung und ihrer Ausgestaltungen besteht damit insbesondere darin, dass das optimal ausgerichtete Erzeugen einer oder mehrerer Inkrementalspuren auch bei einer schon vorhandenen Absolutspur möglich und sinnvoll ist. Auch ein Taumeln einer als Träger für die Maßverkörperung fungierenden Scheibe kann prinzipiell durch Nachführen der CGH Information (CGH = computer-generated hologram) kompensiert werden, indem zum Beispiel aktiv oder aus abgespeicherten Informationen oder aus der Absolutspur ein aktueller Verkippwinkel bestimmt wird und dann die Korrektur des lokal anzuwendenden Gitterstrukturmusters für die Inkrementalspur erfolgt. Es ist sogar möglich, ein Korrektur CGH zu schreiben, welches das schon vor der Montage aufgebrachte ersetzt. Dabei kommt in Betracht, entweder eine bestehende Spur zu überschreiben oder eine neue, üblicherweise weiter außen liegende Spur mit den korrigierten Informationen neu anzulegen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung Abänderungen und Modifikationen möglich, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine Sende- und Empfangseinheit eines zum Erhalt einer Positionsinformation vorgesehenen Messwertgebers und
- FIG 2: ein Diagramm zur Veranschaulichung, dass die Sende- und Empfangseinheit zunächst mit einer hohen Leistung und anschließend mit einer geringeren Leistung betrieben wird.

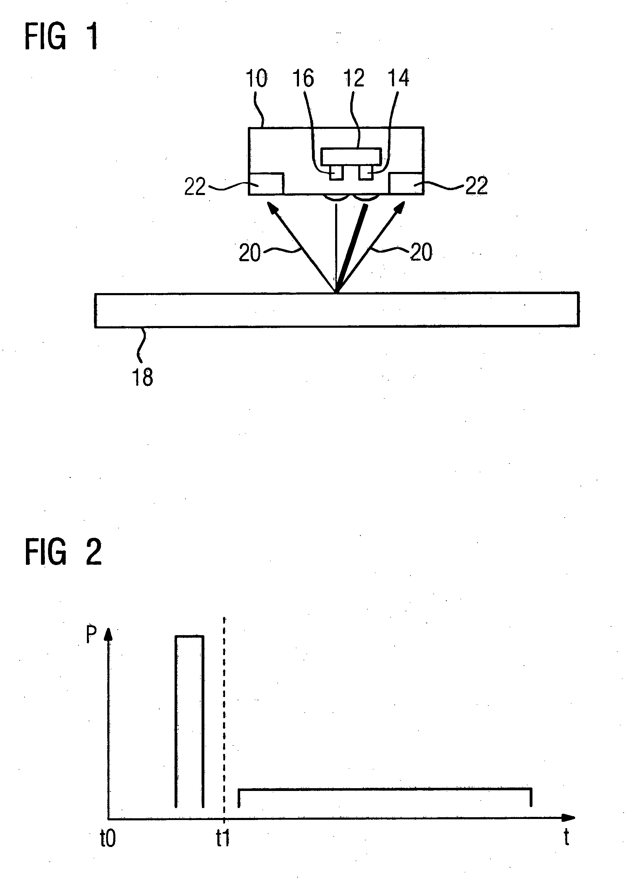

FIG 1 zeigt schematisch vereinfacht eine Sende- und Empfangseinheit eines Messwertgebers 10 zum Erhalt einer Positionsinformation. Der Messwertgeber 10, nämlich dessen Sende- und Empfangseinheit, umfasst eine Lichtquelle 12 und dort einen Austritt für einen Schreiblaser 14 und einen Leselaser 16 bzw. eine entsprechende Laserdiode (zum Beispiel eine VCSEL Laserdiode). Im Betrieb des Messwertgebers 10, also beim Betrieb von dessen Lichtquelle 12, trifft ein jeweiliger Laserstrahl auf einen Träger 18, also zum Beispiel eine rotierende Scheibe. Der Schreiblaser 14 oder die Lichtquelle 12 mit einem Auslass für einen solchen Schreiblaser 14, fungiert als Mittel zum Einbringen von Codierinformationen in den Träger 18, so dass Abschnitte des Trägers 18, in die solche Codierinformationen eingebracht wurden, eine Maßverkörperung darstellen. Sobald solche Codierinformationen in den Träger 18 eingebracht sind, kann die resultierende Maßverkörperung mit dem Leselaser 16 abgetastet werden. Dabei ergeben sich Reflektionen oder Transmissionen (hier nur in Form von Reflektionen dargestellt) an der Maßverkörperung und ein oder mehrere reflektierte (oder transmittierte) Strahlenbüschel 20, die einen in der Maßverkörperung / Codierinformation mikrostrukturell angelegten optischen Code umfassen und von einem oder mehreren Detektoren 22 der Messwertgebers 10 empfangen werden.

Bei einer Lichtquelle 12 mit jeweils einer Laserdiode für den Schreiblaser 14 und den Leselaser 16 sind beide Dioden nahe beieinander angeordnet, so dass sich für den Schreiblaser 14 beim Einbringen der Codierinformation in den Träger der gleiche Strahlengang oder zumindest näherungsweise der gleiche Strahlengang ergibt wie beim späteren Abtasten der so geschriebenen Maßverkörperung mit dem Leselaser 16 ergibt. Ein gleicher oder ausreichend gleicher Strahlengang kann dabei auch durch eine geeignete Optik (nicht dargestellt) gewährleistet werden.

FIG 2 zeigt, dass die Lichtquelle 12 der Sende- / Empfangseinheit in zumindest zwei unterschiedlichen Leistungsstufen betreibbar ist und dass die Lichtquelle 12 beim Einbringen von Codierinformationen in die auf dem Träger 18 befindliche oder entstehende Maßverkörperung mit einer höheren Leistung als beim Abtasten der Maßverkörperung betreibbar ist. Dafür ist auf der Abszisse die Zeit t und auf der Ordinate die Sendeleistung P der Lichtquelle 12 dargestellt. Ein Zeitpunkt t0 bezeichnet einen Zeitpunkt nach der Montage des Messwertgebers 10. Ein Zeitpunkt t1 bezeichnet einen Zeitpunkt nach einer Inbetriebnahme des Messwertgebers 10. Nach einer Montage des Messwertgebers 10 (nach dem Zeitpunkt t0) sendet demnach die Lichtquelle 12 mit hoher Leistung und es wird der zum Einbringen von Codierinformationen in die Maßverkörperung vorgesehene Schreiblaser 14 aktiviert. Ab dem Zeitpunkt t1, also nach Abschluss der Inbetriebnahme, kann die so entstandene Maßverkörperung verwendet und mit dem mit geringerer Leistung betriebenen Leselaser 16 abgetastet werden.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

So kann für die Maßverkörperung zum Beispiel ein Klebestreifen verwendet werden, der nach der Montage des Messwertgebers 10 auf einem dafür geeigneten Träger aufgebracht wird. Die Ausrichtung eines solchen Klebestreifens kann durch den Messwertgeber 10 unterstützt werden, indem durch Aktivierung des Schreib- oder Leselasers 14, 16 eine geeignete Position und Ausrichtung des Klebestreifens angezeigt wird.

Das Einbringen der Codierinformationen wird jeweils durch ein laserbedingtes lokales Verändern eines dafür geeigneten Materials bewirkt. Als Material kommen grundsätzlich alle photoempfindlichen Schichten in Betracht, welche sich durch die Belichtung mit ausreichend Licht belichten lassen und die sich im Betriebszustand bei einer Bestrahlung mit niedriger Lichtleseleistung nicht mehr weiter verändern. Beispiele sind holographische Filme, Fotolacke und dergleichen.

Holographische Filme können wie herkömmliche Filme für die Fotografie ein Gel aufweisen, in dem sich Silberhalogenide befinden. Diese zerfallen unter Lichteinwirkung in Silberkristalle und freie Halogene. Die fein verteilten Silberkristalle bewirken eine lokale Schwärzung des Films bei Intensitätsmaxima der jeweiligen Bestrahlung.

Fotolacke (Photoresist) verändern sich bei einer Belichtung so, dass ein Teil verfestigt wird und der restliche Fotolack entfernbar ist. Bei Positivlacken bleiben die nicht belichteten Bereiche fest, bei Negativlacken verfestigen sich die belichteten Bereiche. Wenn der ablösbare Anteil entfernt wird, bleiben nur die festen Fotolack-Bereiche als Erhöhungen im holographischen Film. Durch die Erhöhungen und dazwischen verbleibende Vertiefungen entsteht ein Relief, weshalb bei einer Verwendung von Fotolacken Phasenhologramme entstehen.

Dichromatgelatine ermöglicht hohe Auflösungen und sehr helle Transmissions- und Reflexionshologramme. Das Material ist für violettes bis grünes Licht am empfindlichsten und reagiert nicht oder kaum auf rotes Licht. Die Luftfeuchtigkeit beschädigt die Dichromatgelatine, so dass die resultierende Maßverkörperung versiegelt werden muss.

Bei Fotopolymeren wird eine Polymerisation durch Belichtung hervorgerufen. Dadurch verändern sich die optischen Eigenschaften wie der Brechungsindex. Die Fotopolymere können fixiert werden, indem sich mit einer inkoherenten Lichtquelle bestrahlt werden. Des Weiteren ändern einige Stoffe wegen des sogenannten photorefraktiven Effekts ihre Brechzahl in Abhängigkeit von der Belichtung. Beispiele für solche Materialien sind Lithiumniobat, Bariumtitanat und Galliumarsenid.

Schließlich kommen auch eine thermisch induzierte Neuordnung / Deorientierung von polarisierenden Elementen und dafür geeignete Materialien in Betracht. Interferenzen entstehen dabei aufgrund lokaler Laufzeitunterschiede und diese wiederum aufgrund materialinhärenter Lichtgeschwindigkeitsunterschiede und/oder lokal geänderter Brechungsindizes nach einer solchen Neuordnung.

Alle Materialien, die nach dem Einbringen der Codierinformation, also nach dem Schreiben, einer Fixierung bedürfen, können im eingebauten Zustand des Messwertgebers 10 fixiert werden. Dafür kann eine ultraviolettes Licht abstrahlende Lichtquelle verwendet werden, die geeignet ist, um zum Beispiel Polymere, Fotolacke und dergleichen auszuhärten. Eine solche eventuelle erforderliche Behandlung mit UV Licht stellt einen abschließenden Schritt in der Inbetriebnahmephase des Messwertgebers 10 dar. Alle Herstellungsverfahren für Hologramme mit ätzenden oder allgemein abtragenden Verfahren zum Einbringen von Codierinformation in ein jeweiliges Trägermaterial und eine Herstellung von entsprechenden Schichtstufen lassen Abfallmaterial entstehen, dessen Entfernung bei einer auf diese Art eingebrachten Codierinformation ebenfalls in einem abschließenden Schritt der Inbetriebnahme des Messwertgebers 10 erfolgt.

Das Einbringen oder Schreiben der Codierinformationen bei erhöhter Laserleistung erfolgt in der Regel einmalig. Es ist jedoch auch denkbar, dass der Endanwender sich eine neue Codierung schreibt (Lizenzierungsmodelle), zum Beispiel nach Servicefällen, Umbauten oder ähnlichem, und die Geberfunktionalität danach wieder optimal verfügbar ist.

Aus fertigungstechnischer Sicht ebenfalls machbar sind Vorrichtungen zum Erstellen von CGH und Gitterbeugungsstrukturen nach dem Stand der Technik der CGH Realisierung (Beschreiben, Bedrucken, Prägen) die sich bei montierter Encoderscheibe anwenden lassen. Diese könnten demnach vor Montage der Sende-/ Leseeinheit (OPU) den montierten Träger mit den Codespuren versehen. Ein Beispiel in dieser Hinsicht ist das jüngst entwickelte sogenannte Sprengprägen.

Einzelne im Vordergrund stehende Aspekte der hier eingereichten Beschreibung lassen sich damit kurz wie folgt zusammenfassen:
Angegeben wird zuvorderst ein Messwertgeber 10 zum Erhalt einer Positionsinformation, wobei der Messwertgeber 10 eine Sende- / Empfangseinheit zur Abtastung einer Maßverkörperung umfasst und wobei der Messwertgeber 10 selbst Mittel zum Einbringen von Codierinformationen in die Maßverkörperung umfasst, sowie ein Verfahren zum Betrieb eines solchen Messwertgebers 10, wobei nach einer Montage des Messwertgebers 10 dieser in einem nachfolgenden Inbetriebnahmeschritt mit dem oder den von dem Messwertgeber 10 umfassten Mittel bzw. Mitteln zum Einbringen von Codierinformationen in die Maßverkörperung selbst die Codierinformationen in die Maßverkörperung einbringt.

## Patentansprüche

1. Messwertgeber (10) zum Erhalt einer Positionsinformation, wobei der Messwertgeber (10) eine Sende- / Empfangseinheit zur Abtastung einer Maßverkörperung umfasst,
wobei der Messwertgeber (10) Mittel zum Einbringen von Codierinformationen in die Maßverkörperung umfasst und
wobei die Sende- / Empfangseinheit als Mittel zum Einbringen von Codierinformationen in die Maßverkörperung fungiert,
**dadurch gekennzeichnet, dass**
die Sende- / Empfangseinheit eine in zumindest zwei unterschiedlichen Wellenlängenbereichen betreibbare Lichtquelle (12) umfasst und
dass die Lichtquelle (12) beim Einbringen von Codierinformationen in die Maßverkörperung in einem anderen Wellenlängenbereich als beim Abtasten der Maßverkörperung betreibbar ist.

2. Messwertgeber (10) nach Anspruch 1, wobei die Sende- / Empfangseinheit eine in zumindest zwei unterschiedlichen Leistungsstufen betreibbare Lichtquelle (12) umfasst, und wobei die Lichtquelle (12) beim Einbringen von Codierinformationen in die Maßverkörperung mit einer höheren Leistung als beim Abtasten der Maßverkörperung betreibbar ist.

3. Messwertgeber (10) nach Anspruch 2, wobei die Sende- / Empfangseinheit als in zumindest zwei unterschiedlichen Leistungsstufen betreibbare Lichtquelle (12) eine Lichtquelle (12) mit zumindest einer ersten und einer zweiten Laserdiode umfasst und wobei bei einem Betrieb der Lichtquelle (12) mit höherer Leistung zumindest die erste und die zweite Laserdiode aktivierbar sind und wobei bei einem Betrieb der Lichtquelle (12) mit verminderter Leistung die erste oder die zweite Laserdiode aktivierbar ist.

4. Messwertgeber (10) nach einem der vorangehenden Ansprüchen, wobei die Sende- / Empfangseinheit als in zumindest zwei unterschiedlichen Wellenlängenbereichen betreibbare Lichtquelle (12) eine Lichtquelle (12) mit zumindest einer ersten und einer zweiten Laserdiode umfasst und wobei bei einem Betrieb der Lichtquelle (12) in einem ersten Wellenlängenbereich eine für diesen Wellenlängenbereich vorgesehene Laserdiode und bei einem Betrieb der Lichtquelle (12) in einem zweiten Wellenlängenbereich eine für diesen Wellenlängenbereich vorgesehene Laserdiode aktivierbar ist.

5. Verfahren zum Betrieb eines Messwertgebers (10) nach einem der Ansprüche 1 bis 4, wobei die Sende- / Empfangseinheit eine in zumindest zwei unterschiedlichen Wellenlängenbereichen betreibbare Lichtquelle (12) umfasst, wobei nach einer Montage des Messwertgebers (10) dieser in einem nachfolgenden Inbetriebnahmeschritt mit der von dem Messwertgeber (10) umfassten und als Mittel zum Einbringen von Codierinformationen in die Maßverkörperung fungierenden Sende- / Empfangseinheit, nämlich deren Lichtquelle (12), selbst die Codierinformationen in die Maßverkörperung einbringt und wobei die Lichtquelle (12) beim Einbringen von Codierinformationen in die Maßverkörperung in einem anderen Wellenlängenbereich als beim Abtasten der Maßverkörperung betrieben wird.

6. Verfahren nach Anspruch 5 zum Betrieb eines Messwertgebers (10) nach Anspruch 2 oder 3, wobei die Sende- / Empfangseinheit eine in zumindest zwei unterschiedlichen Leistungsstufen betreibbare Lichtquelle (12) umfasst, wobei nach einer Montage des Messwertgebers (10) dieser in einem nachfolgenden Inbetriebnahmeschritt mit der von dem Messwertgeber (10) umfassten und als Mittel zum Einbringen von Codierinformationen in die Maßverkörperung fungierenden Sende- / Empfangseinheit, nämlich deren Lichtquelle (12), selbst die Codierinformationen in die Maßverkörperung einbringt und wobei die Lichtquelle (12) beim Einbringen von Codierinformationen in die Maßverkörperung mit einer höheren Leistung als beim Abtasten der Maßverkörperung betrieben wird.

## Claims

1. Position encoder (10), wherein the encoder (10) comprises a transmitter/receiver unit for scanning a material measure,
wherein the encoder (10) comprises means for introducing coding information into the material measure and
wherein the transmitter/receiver unit acts as a means for introducing coding information into the material measure,
**characterised in that**
the transmitter/receiver unit comprises a light source (12) operable in at least two different wavelength ranges and
the light source (12) can be operated in a different wavelength range when introducing coding information into the material measure than when scanning the material measure.

2. Encoder (10) according to claim 1, wherein the transmitter/receiver unit comprises a light source (12) operable in at least two different power levels, and wherein the light source (12) can be operated at a higher power when introducing coding information into the material measure than when scanning the material measure.

3. Encoder (10) according to claim 2, wherein the transmitter/receiver unit comprises, as a light source (12) operable in at least two different power levels, a light source (12) with at least a first and a second laser diode and wherein during operation of the light source (12) at a higher power at least the first and the second laser diode can be activated and wherein during operation of the light source (12) at reduced power the first or the second laser diode can be activated.

4. Encoder (10) according to one of the preceding claims, wherein the transmitter/receiver unit comprises, as a light source (12) operable in at least two different wavelength ranges, a light source (12) with at least a first and a second laser diode and wherein during operation of the light source (12) in a first wavelength range a laser diode intended for this wavelength range can be activated, and during operation of the light source (12) in a second wavelength range a laser diode provided for this wavelength range can be activated.

5. Method for operating an encoder (10) according to one of claims 1 to 4, wherein the transmitter/receiver unit comprises a light source (12) operable in at least two different wavelength ranges, wherein after assembly of the encoder (10) said encoder (10) itself introduces the coding information into the material measure in a subsequent commissioning step with the transmitter/receiver unit - namely the light source (12) of said transmitter/receiver unit - comprised by the encoder (10) and acting as a means for introducing coding information into the material measure, and wherein the light source (12) is operated in a different wavelength range when introducing coding information into the material measure than when scanning the material measure.

6. Method according to claim 5 for operating an encoder (10) according to claim 2 or 3, wherein the transmitter/receiver unit comprises a light source (12) operable in at least two different power levels, wherein after assembly of the encoder (10) said encoder (10) itself introduces the coding information into the material measure in a subsequent commissioning step with the transmitter/receiver unit - namely the light source (12) of said transmitter/receiver unit - comprised by the encoder (10) and acting as a means for introducing coding information into the material measure, and wherein the light source (12) is operated at a higher power when introducing coding information into the material measure than when scanning the material measure.

## Revendications

1. Transmetteur ( 10 ) de valeurs de mesure pour obtenir une information de position, le transmetteur ( 10 ) de valeurs de mesure comprenant une unité d'émission/réception pour l'analyse d'une mesure matérialisée, dans lequel le transmetteur ( 10 ) de valeurs de mesure comprend des moyens pour mettre des informations de codage dans la mesure matérialisée et dans lequel l'unité d'émission/réception sert de moyen pour mettre des informations de codage dans la mesure matérialisée,
**caractérisé en ce que**
l'unité d'émission/réception comprend une source lumineuse pouvant fonctionner dans au moins deux domaines de longueurs d'ondes différents et
**en ce que** la source ( 12 ) lumineuse peut, lors de la mise d'informations de codage dans la mesure matérialisée, fonctionner dans un domaine de longueurs d'ondes autre que lors de l'analyse de la mesure matérialisée.

2. Transmetteur ( 10 ) de valeurs de mesure suivant la revendication 1, dans lequel l'unité d'émission/réception comprend une source ( 12 ) lumineuse pouvant fonctionner dans au moins deux étages de puissance différents et dans lequel la source ( 12 ) lumineuse peut, lors de la mise d'informations de codage dans la mesure matérialisée, fonctionner à une puissance plus grande que lors de l'analyse de la mesure matérialisée.

3. Transmetteur ( 10 ) de valeurs de mesure suivant la revendication 2, dans lequel l'unité d'émission/réception comprend, comme source ( 12 ) lumineuse pouvant fonctionner dans au moins deux étages de puissance différents, une source ( 12 ) lumineuse ayant au moins une première et une deuxième diodes laser et dans lequel, lorsque la source ( 12 ) lumineuse fonctionne à une puissance plus grande, au moins la première et la deuxième diodes laser peuvent être activées et dans lequel, lorsque la source ( 12 ) lumineuse fonctionne à une puissance amoindrie, la première ou la deuxième diode laser peut être activée.

4. Transmetteur ( 10 ) de valeurs de mesure suivant l'une des revendications précédentes, dans lequel l'unité d'émission/ réception comprend, comme source ( 12 ) lumineuse pouvant fonctionner dans au moins deux domaines de longueurs d'ondes différents, une source ( 12 ) lumineuse ayant au moins une première et une deuxième diodes laser et dans lequel, lorsque la source ( 12 ) lumineuse fonctionne dans un premier domaine de longueurs d'ondes, une diode laser prévue pour ce domaine de longueur d'ondes peut être activée et, lorsque la source ( 12 ) lumineuse fonctionne dans un deuxième domaine de longueurs d'ondes, une diode laser prévue pour ce domaine de longueurs d'onde peut être activée.

5. Procédé pour faire fonctionner un transmetteur ( 10 ) de valeurs de mesure suivant l'une des revendications 1 à 4, dans lequel l'unité d'émission/réception comprend une source ( 12 ) lumineuse pouvant fonctionner dans au moins deux domaines de longueurs d'ondes différents, dans lequel, après un montage du transmetteur ( 10 ) de valeurs de mesure, celui-ci, dans un stade de mise en fonctionnement venant ensuite, met par l'unité d'émission/réception, à savoir sa source ( 12 ) lumineuse, comprise dans le transmetteur ( 10 ) de valeurs de mesure et servant de moyen pour mettre les informations de codage dans la mesure matérialisée, soi-même les informations de codage dans la mesure matérialisée et dans lequel on fait fonctionner la source ( 12 ) lumineuse, lors de la mise d'informations de codage dans la mesure matérialisée, dans un domaine de longueurs d'ondes autre que lors de l'analyse de la mesure matérialisée.

6. Procédé suivant la revendication 5 pour faire fonctionner un transmetteur ( 10 ) de valeurs de mesure suivant la revendication 2 ou 3, dans lequel l'unité d'émission/réception comprend une source ( 12 ) lumineuse pouvant fonctionner dans au moins deux étages de puissance différents, dans lequel, après un montage du transmetteur ( 10 ) de valeurs de mesure, celui-ci, dans un stade de mise en fonctionnement venant ensuite, met par l'unité d'émission/réception, à savoir sa source ( 12 ) lumineuse, comprise dans le transmetteur ( 10 ) de valeurs de mesure et servant de moyen pour mettre des informations de codage dans la mesure matérialisée, soi-même les informations de codage dans la mesure matérialisée et dans lequel on fait fonctionner la source ( 12 ) lumineuse, lors de la mise d'informations de codage dans la mesure matérialisée, à une puissance plus grande que lors de l'analyse de la mesure matérialisée.
